(19) Europäisches Patentamt / European Patent Office / Office européen des brevets

(11) **EP 4 325 403 A1**

(12) **EUROPEAN PATENT APPLICATION**

(43) Date of publication:
**21.02.2024 Bulletin 2024/08**

(21) Application number: **23178912.4**

(22) Date of filing: **13.06.2023**

(51) International Patent Classification (IPC):
**G06Q 10/047** (2023.01)    **G06Q 10/083** (2024.01)
**G06Q 10/0831** (2023.01)    **G06Q 10/0832** (2023.01)
**G06Q 10/0835** (2023.01)    **G06Q 10/08** (2024.01)

(52) Cooperative Patent Classification (CPC):
**G06Q 10/083; G06Q 10/047; G06Q 10/08;
G06Q 10/0831; G06Q 10/0832; G06Q 10/08355**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.08.2022 JP 2022130205**

(71) Applicant: **FUJITSU LIMITED**
**Kawasaki-shi, Kanagawa 211-8588 (JP)**

(72) Inventor: **IKEDA, Hiroshi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **PROGRAM, SEARCH METHOD, AND INFORMATION PROCESSING APPARATUS**

(57) A computer acquires candidate data including operation plan candidates, each indicating a candidate of at least one location by which a transporter transporting a load periodically stops and a time when the transporter stops by each of the locations, at least one operation plan candidate being defined by using a time included in a period of one cycle and a time not included in the period. The computer determines, when first and second operation plan candidates include a common location, whether transshipment of the load at the common location is possible by shifting a second time included in the second operation plan candidate by an integer multiple of the period and comparing the shifted second time with a first time included in the first operation plan candidate. The computer searches for at least two operation plan candidates for transporting the load, based on a determination result of the transshipment.

FIG. 1

**Description**

FIELD

The embodiments relate to a program, a search method, and an information processing apparatus.

BACKGROUND

There are cases in which computers search for efficient operation schedules by using mathematical programming solvers. For example, a computer formulates an operational problem as an integer programming problem including discrete variables, an objective function, and constraint conditions and searches for an optimum discrete value by solving the integer programming problem. One example of the operational problems is optimization of operation plans for transporters that transport loads. For example, the computer searches for a combination of operation plans that minimizes the cost while satisfying a given load transportation demand. When one transporter is not enough for a certain load to reach its destination, there are cases in which the load is transshipped between transporters.

There has been proposed a scheduling apparatus that determines operation schedules for vehicles that transport loads. The proposed scheduling apparatus extracts stores to which loads are repeatedly delivered on a specific day of the week and generates and holds an inter-store travel time matrix corresponding to the specific day of the week. There has also been proposed a patrol planning apparatus that determines a patrol route for patrolling a plurality of devices when maintenance work is performed on each of the plurality of devices at a constant cycle. The proposed patrol planning apparatus creates a patrol schedule for a certain month based on the maintenance cycle of each device and optimizes a patrol route such that the moving distance from a device installation location to another device installation location is minimized.

Further, there has been proposed a schedule optimization system that searches for a transportation schedule that minimizes the transportation cost for a certain period of time by using a mathematical model. There has also been proposed a route management system that estimates, per driver, a needed time from a transportation route.

See, for example, Japanese Laid-Open Patent Publication No. 06-263220, Japanese Laid-Open Patent Publication No. 2002-304501, U.S. Patent Application Publication No. 2008/0294484, and U.S. Patent Application Publication No. 2018/0089608.

In logistics operations, there are cases in which periodic operation plans are created for practical reasons, such as for arrangements for drivers. A periodic operation plan is, for example, an operation plan for a period of 24 hours, an operation plan for a period of one week, or an operation plan for a period of one month. The periodic operation plan is repeatedly executed.

When the optimization of a periodic operation plan is formulated as a mathematical programming problem, a computer could define a period of one cycle and generate operation plan candidates by using only the time included in the period of one cycle. In this case, a transporter that operates over a boundary of the period is not expressed by a single operation plan candidate. This transporter is divided by the boundary time and expressed by at least two operation plan candidates. For example, when a period of one cycle is 24 hours from 0:00 to 24:00, the operation of a transporter operating from 22:00 to 5:00 is divided into and expressed by an operation plan candidate from 22:00 to 24:00 and an operation plan candidate from 0:00 to 5:00.

However, when the computer solves this mathematical programming problem, it is difficult to set the location where the transporter is present at the boundary time to be variable, and the location could therefore be fixed as a given boundary condition. As a result, there are cases in which the computer fails to reach an optimum operation plan that the computer could reach if the boundary condition could be changed.

SUMMARY

It is an object in one aspect of the embodiments to improve the accuracy in searching for periodic operation plans for transporters that transport loads.

According to one aspect, there is provided a computer program that causes a computer to execute a process including: acquiring candidate data that includes a plurality of operation plan candidates, each of which indicates a candidate of at least one location by which a transporter capable of transporting a load periodically stops and a candidate of a time at which the transporter stops by each of the at least one location, at least one of the plurality of operation plan candidates being defined by using a time included in a period of one cycle and a time not included in the period of one cycle; determining, when a first operation plan candidate and a second operation plan candidate among the plurality of operation plan candidates include a common location (D) among the at least one location, whether transshipment of the load at the common location is possible by shifting a second time included in the second operation plan candidate by an integer multiple of the period of one cycle and comparing the shifted second time with a first time included in the first operation plan candidate; and searching the plurality of operation plan candidates for a combination of at least two operation plan candidates for transporting the load, based on a determination result of the transshipment.

BRIEF DESCRIPTION OF DRAWINGS

FIG. 1 illustrates an information processing apparatus according to a first embodiment;
FIG. 2 illustrates a hardware example of an information processing apparatus according to a second embodiment;
FIG. 3 illustrates examples of operation plans and logistics plans;
FIG. 4 illustrates a structure example of a load table;
FIG. 5 illustrates a structure example of an operation plan table;
FIG. 6 illustrates a structure example of a logistics plan table;
FIG. 7 illustrates examples of operation plan candidates and logistics plan candidates;
FIG. 8 illustrates an example of formulation of an integer programming problem;
FIG. 9 illustrates examples of operation plans that extend over the boundaries of a plan cycle;
FIG. 10 illustrates examples of a relationship between models and instances of operation plan candidates;
FIG. 11 illustrates examples, in each of which an actual time difference is calculated from the model of an operation plan candidate;
FIG. 12 illustrates an example of a pseudo code for calculating an actual time difference;
FIG. 13 illustrates examples of operation routes with boundary conditions;
FIG. 14 illustrates examples of operation routes without boundary conditions;
FIG. 15 is a block diagram illustrating a functional example of the information processing apparatus; and
FIG. 16 is a flowchart illustrating an example of a procedure for optimizing a delivery plan.

DESCRIPTION OF EMBODIMENTS

Hereinafter, the embodiments will be described with reference to the accompanying drawings.

[First Embodiment]

A first embodiment will be described.

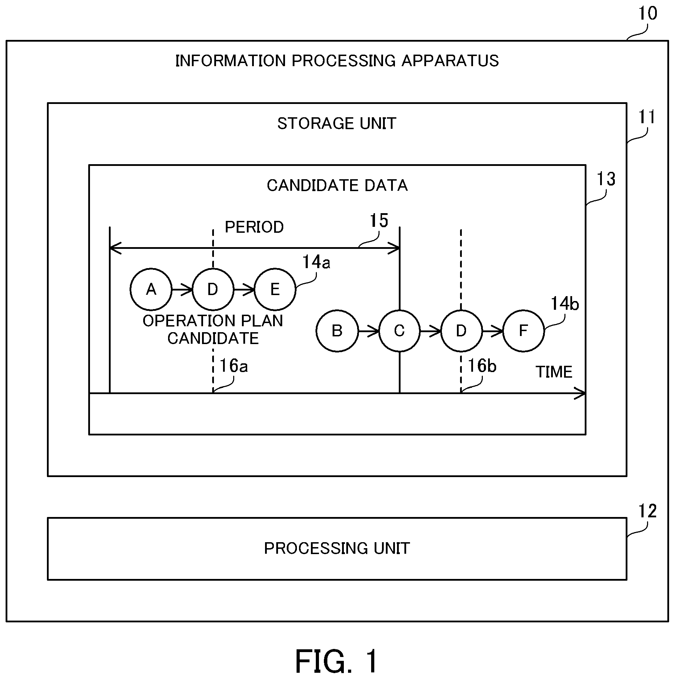

FIG. 1 illustrates an information processing apparatus according to the first embodiment.
This information processing apparatus 10 according to the first embodiment searches for periodic operation plans for transporters capable of transporting loads. For example, the information processing apparatus 10 formulates optimization of a periodic operation plan as an integer programming problem and solves the integer programming problem by using an integer programming solver. The information processing apparatus 10 may be a client apparatus or a server apparatus. The information processing apparatus 10 may be referred to as a computer, a search apparatus, or an optimization apparatus.
The information processing apparatus 10 includes a storage unit 11 and a processing unit 12. The storage unit 11 may be a volatile semiconductor memory, such as a random-access memory (RAM), or may be a nonvolatile storage, such as a hard disk drive (HDD) or a flash memory. For example, the processing unit 12 is a processor, such as a central processing unit (CPU), a graphics processing unit (GPU), or a digital signal processor (DSP). The processing unit 12 may include an electronic circuit, such as an application specific integrated circuit (ASIC) or a field programmable gate array (FPGA). For example, the processor executes a program stored in a memory, such as a RAM (such as the storage unit 11). A group of processors may be referred to as a multiprocessor or simply a "processor".
The storage unit 11 stores candidate data 13. The candidate data 13 may be generated by the information processing apparatus 10 or may be generated by another information processing apparatus. The candidate data 13 includes a plurality of operation plan candidates. Each operation plan candidate indicates a candidate of at least one location by which a transporter capable of transporting a load periodically stops and a time at which the transporter stops by the at least one location.
Herein, the transporters are, for example, vehicles that transport loads by land, ships that transport loads by sea, or airplanes that transport loads by air. The locations included in an operation plan candidate are, for example, logistics bases at which loads are collected. A time included in an operation plan candidate is, for example, an arrival time at which a transporter arrives at a certain location or a departure time at which the transporter departs from the certain location. For example, a period 15, which corresponds to one cycle, is 24 hours from 0:00 to 24:00 or one week from 0:00 on day 0 to 24:00 on day 6.
The operation of one transporter from a start point to an end point is expressed by one operation plan candidate and is not divided by the boundaries of the period 15. An operation plan candidate could be defined by using only the time included in the period 15. In this case, a start-point time and an end-point time are included in the period 15. Another operation plan candidate could be defined by using the time included in the period 15 and a time not included in the period 15. In this case, at least one of the start-point time and the end-point time is not included in the period 15.

For example, an individual operation plan candidate is defined such that its start-point time is included in the period 15. Such an operation plan candidate may include a time after the period 15. Since the operation plans are periodically executed, a transporter that has departed in a period before the period 15 could travel in the period 15. In this case, the candidate data 13 does not need to include the operation plan candidate corresponding to the transporter that has departed in the period before the period 15. That is, the individual periodic operation plan candidate appears in the candidate data 13 only once and does not need to appear more than once.

When the period 15 is 24 hours from 0:00 to 24:00, an operation plan candidate may include a time after the period 15, such as 25:00. When the period 15 is one week from 0:00 on day 0 to 24:00 on day 6, an operation plan candidate may include a time after the period 15, such as 10:00 on day 8. For example, an individual operation plan candidate is defined such that its end-point time is included in the period 15. In this case, a time before the period 15 may be used.

For example, the candidate data 13 includes operation plan candidates 14a and 14b. A transporter based on the operation plan candidate 14a stops by locations A, D, and E in this order. The transporter stops by each of the locations A, D, and E at a time included in the period 15. The transporter stops by the location D at time 16a. A transporter based on the operation plan candidate 14b stops by locations B, C, D, and F in this order. While the transporter stops by each of the locations B and C at a time included in the period 15, the transporter stops by each of the locations D and F at a time not included in the period 15. The transporter stops by the location D at time 16b.

When two operation plan candidates included in the candidate data 13 include a common location, the processing unit 12 determines whether transshipment of a load is possible at the common location. For example, when the time difference between the arrival time at which the transporter based on one of the two operation plan candidates arrives at the common location and the departure time at which the transporter based on the other operation plan candidate departs from the common location is within a certain range, the processing unit 12 determines that transshipment of the load is possible between the two transporters.

However, there are cases in which one or both of the two operation plan candidates are defined by using a time not included in the period 15. In addition, these two operation plan candidates are periodically executed. Therefore, in view of the periodicity, even when the times of the two operation plan candidates are greatly apart from each other, there are cases in which transshipment of the load is practically possible. For example, in the candidate data 13, even when the time range from the start-point time to the end-point time does not overlap between the two operation plan candidates, a transporter that has departed in a different period may be traveling in parallel.

Thus, the processing unit 12 shifts the time included in one operation plan candidate by an integer multiple of the period of one cycle and compares the shifted time with the time included in the other operation plan candidate. The processing unit 12 may shift both of the times of the two operation plan candidates by an integer multiple of the period of one cycle. When the period of one cycle is 24 hours, the integer multiples of the cycle are 0 hours, 24 hours, 48 hours, and so on. When the period of one cycle is 7 days, the integer multiples of the cycle are 0 days, 7 days, 14 days, and so on. For example, the processing unit 12 determines the integer multiple of the cycle such that the time difference to be compared with the certain range is minimized.

For example, the processing unit 12 compares the time 16a included in the operation plan candidate 14a with the time 16b included in the operation plan candidate 14b. In this case, because the operation plan candidates 14a and 14b do not overlap on the time axis, the processing unit 12 determines that the transshipment is not possible in this state. Therefore, the processing unit 12 subtracts one cycle from the time 16b and compares the obtained time with the time 16a. If the processing unit 12 determines that the transshipment is possible, the load is transshipped between the transporter based on the operation plan candidate 14a, the transporter having departed in the period 15, and a transporter based on the operation plan candidate 14b, the transporter having departed in the previous period.

The processing unit 12 searches the plurality of operation plan candidates included in the candidate data 13 for a combination of at least two operation plan candidates for transshipping loads, based on the determination result of the transshipment. For example, the processing unit 12 selects at least two operation plan candidates such that a given load transportation demand is satisfied and a cost calculated by a cost function is minimized. For example, the processing unit 12 formulates optimization of a combination of operation plan candidates as an integer programming problem including an objective function and constraint conditions and solves the integer programming problem by using an integer programming solver. The processing unit 12 outputs the combination of operation plan candidates as a search result. The processing unit 12 may store the search result in a non-volatile storage, may display the search result on a display device, or may transmit the search result to another information processing apparatus.

As described above, the information processing apparatus 10 according to the first embodiment acquires the candidate data 13 in which at least one of the operation plan candidates is defined by using a time included in the period 15, which corresponds to one cycle, and a time not included in the period 15. If the operation plan candidates 14a and 14b include a common location, the information processing apparatus 10 shifts the time 16b of the operation plan candidate 14b by an integer multiple of the period, compares the shifted time 16b with the time 16a of the operation plan candidate 14a, and determines whether transshipment of the load is possible at the common location. The information processing apparatus 10 searches for a combination of at least two operation plan candidates for transporting the load, based on the determination result of the transshipment.

In this way, no operation plan candidates are divided at any boundary time of the period 15, and no boundary conditions specifying the locations where the transporters are present at the boundary times are needed. Thus, the information processing apparatus 10 is able to search for combinations of operation plan candidates that are unreachable under the constraints of the boundary conditions, and as a result, the accuracy in searching for periodic operation plans is improved. Conventionally, there are cases in which the times included in two operation plan candidates are simply compared with each other and the transshipment is determined not possible. However, the information processing apparatus 10 compares actual times in view of the periodicity. Thus, even when the boundary conditions are eliminated, the information processing apparatus 10 is able to accurately determine whether transshipment of a load between two transporters is possible.

The information processing apparatus 10 may calculate an actual transshipment time based on the difference between the time between the time 16b, which has been shifted by an integer multiple of the corresponding period, and the time 16a. If the transshipment time is within a certain range, the information processing apparatus 10 may determine that transshipment of the load is possible. In this way, whether transshipment of a load is possible is accurately determined based on actual logistics operations.

The information processing apparatus 10 may determine the integer multiple such that the calculated transshipment time is minimized. In this way, the information processing apparatus 10 is able to accurately calculate the transshipment time in view of the periodicity of the operation plan candidates. Further, among the combinations of operation plan candidates, each of which enables transporting a load from a designated departure location to a designated arrival location while transshipping the load, the information processing apparatus 10 may search for a combination of operation plan candidates such that a cost calculated by a cost function is minimized. As a result, the operation plans for the transporters are optimized, and the efficiency of the logistics operations is improved.

[Second Embodiment]

Next, a second embodiment will be described.

An information processing apparatus 100 according to the second embodiment optimizes delivery plans in logistics operations. A delivery plan includes an operation plan and a logistics plan. The operation plan indicates an operation route and operation times of a transporter capable of transporting a load. The logistics plan indicates at least one transporter used for transporting a load from a designated departure location to a designated arrival location. The second embodiment assumes trucks as the transporters. The information processing apparatus 100 may be a client apparatus or a server apparatus. The information processing apparatus 100 may be referred to as a computer, a search apparatus, or an optimization apparatus. The information processing apparatus 100 corresponds to the information processing apparatus 10 according to the first embodiment.

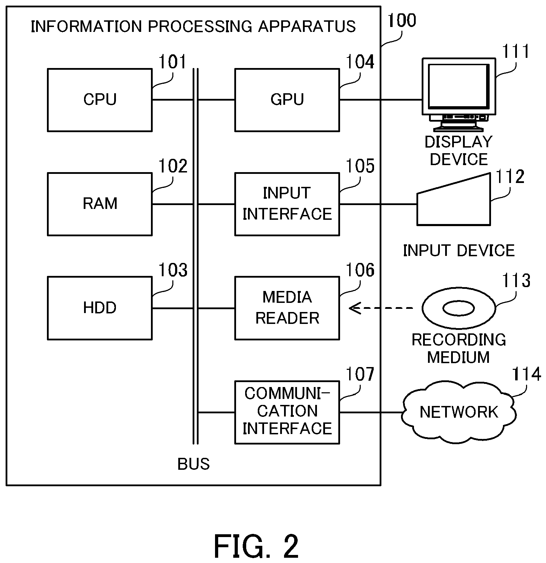

FIG. 2 illustrates a hardware example of the information processing apparatus according to the second embodiment.

The information processing apparatus 100 includes a CPU 101, a RAM 102, an HDD 103, a GPU 104, an input interface 105, a media reader 106, and a communication interface 107, which are connected to a bus. The CPU 101 corresponds to the processing unit 12 according to the first embodiment. The RAM 102 or the HDD 103 corresponds to the storage unit 11 according to the first embodiment.

The CPU 101 is a processor that executes program instructions. The CPU 101 loads a program and data stored in the HDD 103 to the RAM 102 and executes the program. The information processing apparatus 100 may include a plurality of processors.

The RAM 102 is a volatile semiconductor memory that temporarily stores a program executed by the CPU 101 and data used by the CPU 101 for calculation. The information processing apparatus 100 may include a different kind of volatile memory other than a RAM.

The HDD 103 is a nonvolatile storage that stores an operating system (OS), middleware, software programs such as application software, and data. The information processing apparatus 100 may include a different kind of nonvolatile storage such as a flash memory or a solid-state drive (SSD).

The GPU 104 performs image processing in coordination with the CPU 101 and outputs an image to a display device 111 connected to the information processing apparatus 100. Examples of the display device 111 include a cathode ray tube (CRT) display, a liquid crystal display, an organic electro-luminescence (EL) display, and a projector. A different kind of output device such as a printer may be connected to the information processing apparatus 100. The GPU 104 may be used as a general-purpose computing on graphics processing unit (GPGPU). The GPU 104 may execute a program in response to an instruction from the CPU 101. The information processing apparatus 100 may include a volatile semiconductor memory other than the RAM 102 as a GPU memory.

The input interface 105 receives an input signal from an input device 112 connected to the information processing apparatus 100. Examples of the input device 112 include a mouse, a touch panel, and a keyboard. A plurality of input devices may be connected to the information processing apparatus 100.

The media reader 106 is a reading device that reads out a program and data recorded in a recording medium 113. Examples of the recording medium 113 include a magnetic disk, an optical disc, and a semiconductor memory. Examples of the magnetic disk include a flexible disk (FD) and an HDD. Examples of the optical disc include a compact disc (CD) and a digital versatile disc (DVD) . The media reader 106 copies a program and data read out from the recording medium 113 to another recording medium such as the RAM 102 or the HDD 103. This read program may be executed by the CPU 101.

The recording medium 113 may be a portable recording medium and may be used for distribution of a program and data. The recording medium 113 and the HDD 103 may each be referred to as a computer-readable recording medium.

The communication interface 107 communicates with other information processing apparatuses via a network 114. The communication interface 107 may be a wired communication interface connected to a wired communication device such as a switch or a router or may be a wireless communication interface connected to a wireless communication device such as a base station or an access point.

Next, the operation plans and the logistics plans will be described.

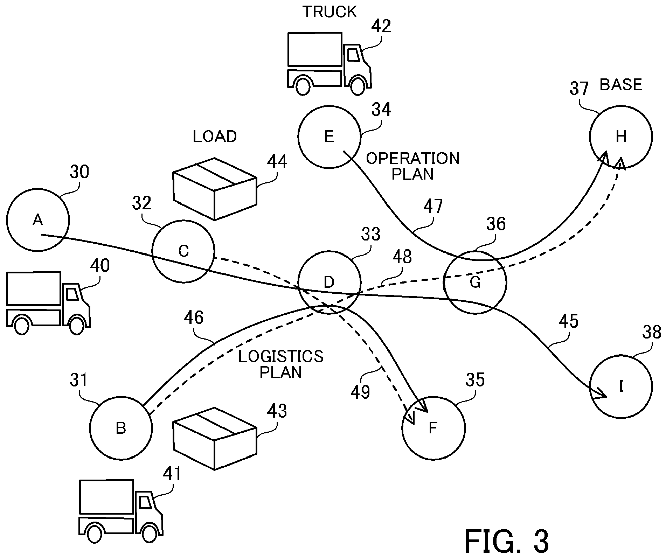

FIG. 3 illustrates examples of the operation plans and the logistics plans.

Bases 30 to 38 (bases A, B, C, D, E, F, G, H, and I) are logistics bases where loads are collected. The base 30 and the base 32 are connected by a road, the base 32 and the base 33 are connected by a road, the base 31 and the base 33 are connected by a road, the base 33 and the base 35 are connected by a road, the base 33 and the base 36 are connected by a road, the base 34 and the base 36 are connected by a road, the base 36 and the base 37 are connected by a road, and the base 36 and the base 38 are connected by a road. The connection relationship among the bases is represented by a base graph. The base graph is an undirected graph including a plurality of nodes representing the bases and a plurality of edges representing the inter-base sections.

A logistics operator operates trucks 40 to 42. An operation plan 45 indicates an operation route and operation times of the truck 40. The truck 40 departs from the base 30 and arrives at the base 38 via the bases 32, 33, and 36. An operation plan 46 indicates an operation route and operation times of the truck 41. The truck 41 departs from the base 31 and arrives at the base 35 via the base 33. An operation plan 47 indicates an operation route and operation times of the truck 42. The truck 42 departs from the base 34 and arrives at the base 37 via the base 36.

A load 43 is transported from the base 31 to the base 37. A logistics plan 48 indicates trucks that transport the load 43. The load 43 is transported from the base 31 to the base 33 by the truck 41. The load 43 is transshipped from the truck 41 to the truck 40 at the base 33 and transported from the base 33 to the base 36 by the truck 40. The load 43 is transshipped from the truck 40 to the truck 42 at the base 36 and transported from the base 36 to the base 37 by the truck 42.

A load 44 is transported from the base 32 to the base 35. A logistics plan 49 indicates trucks that transport the load 44. The load 44 is transported from the base 32 to the base 33 by the truck 40. The load 44 is transshipped from the truck 40 to the truck 41 at the base 33 and transported from the base 33 to the base 35 by the truck 41.

The "load" according to the second embodiment indicates a group of loads having the same departure base, arrival base, earliest possible loading time at the departure base, and arrival time limit at the arrival base. The same logistics plan is applied to such a group of loads. In addition, the information processing apparatus 100 is able to perform a simulation on a scale of 300 bases, 7,000 sections, 6,000 trucks, and 40,000 loads, for example.

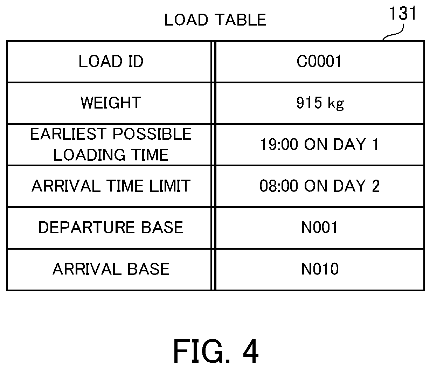

FIG. 4 illustrates a structure example of a load table.

The information processing apparatus 100 holds a load table 131. The load table 131 includes a plurality of records corresponding to a plurality of loads. Each record includes information about "load ID", "weight", "earliest possible loading time", "arrival time limit", "departure base", and "arrival base".

"Load ID" is an identifier that identifies a load. "Weight" is the weight of the load. "Earliest possible loading time" is the earliest time at which the load is loadable on a corresponding transporter at a departure base. "Arrival time limit" is the latest time at which the load arrives at an arrival base. "Departure base" is a base at which the load is collected and is expressed by an identifier that identifies the base. "Arrival base" is a destination base of the load and is expressed by an identifier that identifies the base.

The information processing apparatus 100 refers to an old delivery plan that is currently used and generates an optimized new delivery plan. The old delivery plan includes an old operation plan and an old logistics plan. The new delivery plan includes a new operation plan and a new logistics plan. To generate the new delivery plan, the information processing apparatus 100 may take over the load data used in the old delivery plan. Alternatively, the information processing apparatus 100 may receive load data indicating the latest load state from the user or may receive load data indicating prediction of a future load state.

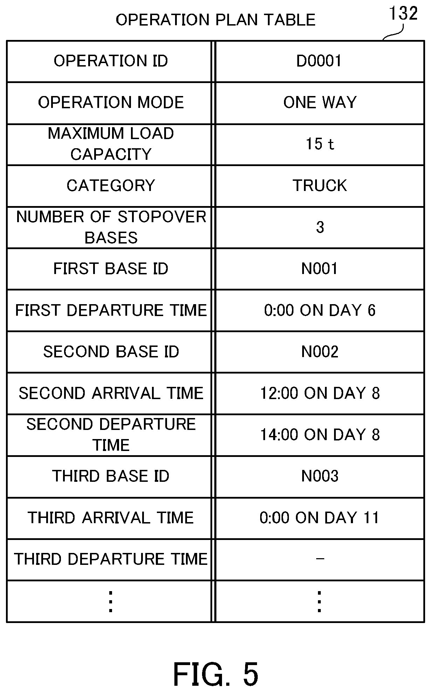

FIG. 5 illustrates a structure example of an operation plan table.

The information processing apparatus 100 holds an operation plan table 132. The operation plan table 132 includes a plurality of records corresponding to a plurality of operation plans. Each record includes information about "operation ID", "operation mode", "maximum load capacity", "category", "number of stopover bases", "base ID of stopover base", "arrival time at stopover base", and "departure time at stopover base".

"Operation ID" is an identifier that identifies an operation plan. "Operation mode" is the type of the operation plan, and examples of the type include a one-way trip, a round trip, and a circular trip. "Maximum load capacity" is the upper limit of the total weight of a load loadable on a corresponding transporter. "Category" is the type of the transporter, and examples of the type include a truck, a train, and a ship. "Number of stopover bases" is the number of bases by which the corresponding transporter stops. Herein, the start point and the end point are included in the number of stopover bases. "Base ID of stopover base" is an identifier that identifies a stopover base. "Arrival time at stopover base" is a scheduled time at which the corresponding transporter arrives at a stopover base. "Departure time at stopover base" is a scheduled time at which the corresponding transporter departs from a stopover base.

The information processing apparatus 100 refers to an old operation plan and generates a new operation plan. Without changing the start point and the end point in the old operation plan, the information processing apparatus 100 generates an operation plan candidate in which the intermediate route has been changed. Alternatively, the information processing apparatus 100 generates an operation plan candidate in which the departure time at the start point has been changed. The information processing apparatus 100 may receive a needed time between two neighboring bases from the user or may take over data from the old operation plan.

The information processing apparatus 100 may receive a stopover time at a base from the user or may take over data from the old operation plan. The stopover time is time from the arrival time to the departure time. Different stopover times may be set for different bases. Alternatively, the same stopover time may be set for all the bases. The individual stopover time is, for example, approximately 2 hours.

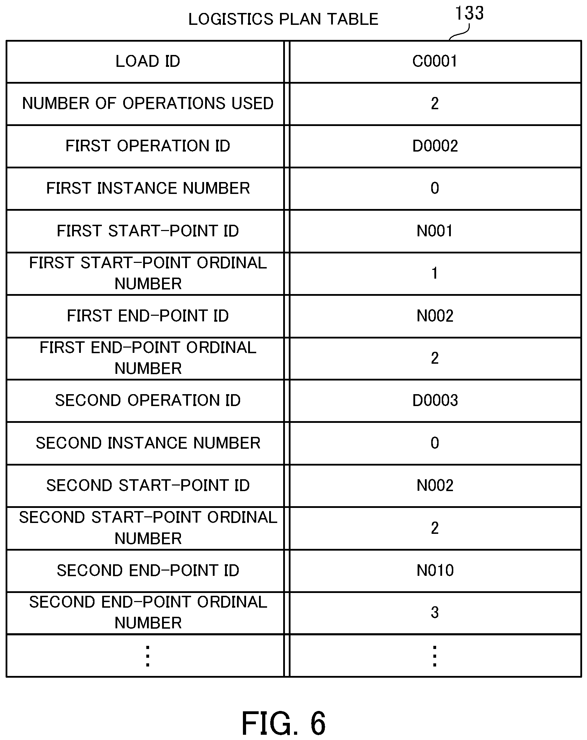

FIG. 6 illustrates a structure example of a logistics plan table.

The information processing apparatus 100 holds a logistics plan table 133. The logistics plan table 133 includes a plurality of records corresponding to a plurality of logistics plans. Each record includes information about "load ID", "number of operations used", "operation ID of operation plan", "instance number of operation plan", "start-point ID of operation plan", "start-point ordinal number of operation plan", "end-point ID of operation plan", and "end-point ordinal number of operation plan".

"Load ID" is an identifier that identifies a load. "Number of operations used" is the number of operation plans combined to transport the load from a departure base to an arrival base. "Operation ID of operation plan" is an identifier that identifies an operation plan. "Instance number of operation plan" indicates the week in which the load is loaded on a transporter. As will be described below, the operation plan according to the second embodiment is repeatedly executed at a cycle of one week. The period of one cycle is from 0:00 on day $7 \times i$ to 24:00 on day $(7 (i + 1) - 1)$, where i is an integer. The instance number indicates the integer i.

"Start-point ID of operation plan" is an identifier that identifies a base at which the load is loaded on the transporter. "Start-point ordinal number of operation plan" is a natural number indicating the order of a stopover base at which the load is loaded on the transporter in the operation plan. "End-point ID of operation plan" is an identifier that identifies a base at which the load is unloaded from the transporter. "End-point ordinal number of operation plan" is a natural number indicating the order of a stopover base at which the load is unloaded from the transporter in the operation plan. Examples of the base at which the load is unloaded and the base at which the load is loaded include a base at which the load is transshipped between transporters.

The information processing apparatus 100 generates a new logistics plan candidate from load data and a plurality of operation plan candidates. The information processing apparatus 100 generates at least one logistics plan candidate per load. For example, the information processing apparatus 100 searches the operation plan candidates with which a load reaches from the current base in which the load is present closer to a designated arrival base for an operation plan candidate that enables loading the load at the current base.

If the searched operation plan candidate does not pass through the designated arrival base, the information processing apparatus 100 searches for another operation plan candidate that enables transshipment of the load per stopover base. The information processing apparatus 100 determines that transshipment of the load is possible if the difference between the arrival time of one operation plan candidate and the departure time of another operation plan candidate is within a certain range. The information processing apparatus 100 repeats transshipment of the load until the load reaches the designated arrival base. When a combination of the operation plan candidates with which the load reaches the designated arrival base from the designated departure base has been determined, the information processing apparatus 100 checks whether the arrival time does not exceed a designated arrival time limit. If the arrival time does not exceed the arrival time limit, the information processing apparatus 100 generates a logistics plan candidate indicating the combination of operation plan candidates.

Next, optimization of operation plans and logistics plans will be described.

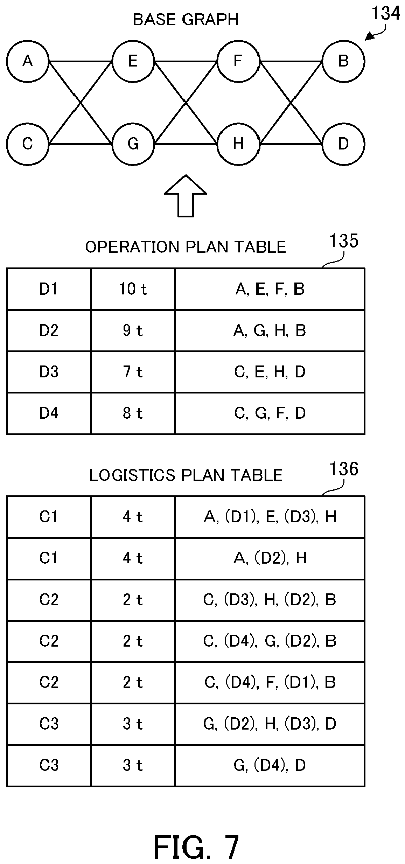

FIG. 7 illustrates examples of operation plan candidates and logistics plan candidates.

Hereinafter, a method for optimizing operation plans and logistics plans will be described by using a base graph 134, an operation plan table 135, and a logistics plan table 136. The base graph 134 indicates the adjacency relationship among eight bases. A base A is adjacent to a base E, the base A is adjacent to a base G, a base C is adjacent to the base E, the base C is adjacent to the base G, the base E is adjacent to a base F, the base E is adjacent to a base H, the base G is adjacent to the base F, the base G is adjacent to the base H, the base F is adjacent to a base B, the base F is adjacent to a base D, the base H is adjacent to the base B, and the base H is adjacent to the base D.

The operation plan table 135 includes four operation plan candidates. An operation plan candidate D1 indicates that a 10-ton truck stops by the bases A, E, F, and B. An operation plan candidate D2 indicates that a 9-ton truck stops by the bases A, G, H, and B. An operation plan candidate D3 indicates that a 7-ton truck stops by the bases C, E, H, and D. An operation plan candidate D4 indicates that an 8-ton truck stops by the bases C, G, F, and D.

The logistics plan table 136 includes 7 logistics plan candidates about loads C1, C2, and C3. The load C1 weighing 4 tons is transported from the base A to the base H. A first logistics plan candidate indicates that the load C1 is first transported from the base A to the base E by using the operation plan candidate D1 and is next transported from the base E to the base H by using the operation plan candidate D3. A second logistics plan candidate indicates that the load C1 is transported from the base A to the base H by using the operation plan candidate D2.

The load C2 weighing 2 tons is transported from the base C to the base B. A third logistics plan candidate indicates that the load C2 is first transported from the base C to the base H by using the operation plan candidate D3 and is next transported from the base H to the base B by using the operation plan candidate D2. A fourth logistics plan candidate indicates that the load C2 is first transported from the base C to the base G by using the operation plan candidate D4 and is next transported from the base G to the base B by using the operation plan candidate D2. A fifth logistics plan candidate indicates that the load C2 is first transported from the base C to the base F by using the operation plan candidate D4 and is next transported from the base F to the base B by using the operation plan candidate D1.

The load C3 weighing 3 tons is transported from the base G to the base D. A sixth logistics plan candidate indicates that the load C3 is first transported from the base G to the base H by using the operation plan candidate D2 and is next transported from the base H to the base D by using the operation plan candidate D3. A seventh logistics plan candidate indicates that the load C3 is transported from the base G to the base D by using the operation plan candidate D4.

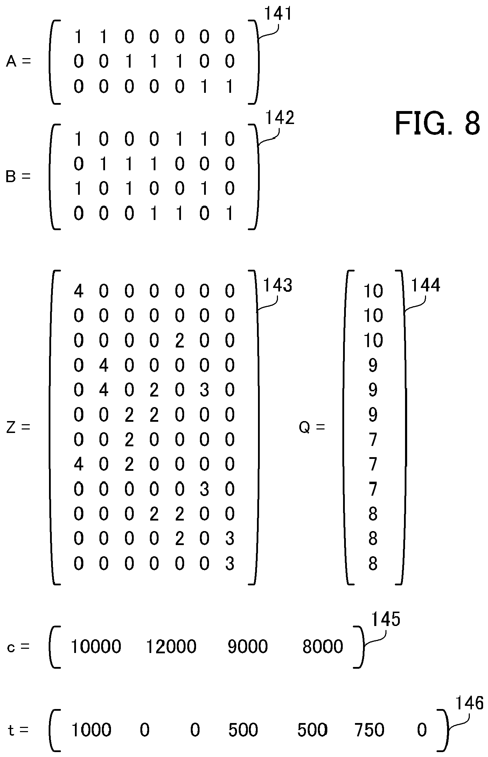

FIG. 8 illustrates an example of formulation of an integer programming problem.

The information processing apparatus 100 generates a delivery plan such that the cost is minimized, by selecting at least one operation plan candidate from the operation plan table 135 and selecting at least one logistics plan candidate from the logistics plan table 136. The information processing apparatus 100 formulates the above optimization problem as an integer programming problem and solves the integer programming problem by using an integer programming solver.

First, the information processing apparatus 100 generates solution vectors X and Y. The solution vector X is a column vector in which m variables are arranged, where m is the number of logistics plan candidates. In the example in FIG. 7, m = 7. The individual variable included in the solution vector X is a binary variable having a value of 0 or 1. The i-th variable in the solution vector X indicates whether the i-th logistics plan candidate is adopted. The value 0 represents that the corresponding logistics plan candidate is not adopted, and the value 1 represents that the corresponding logistics plan candidate is adopted.

The solution vector Y is a column vector in which p variables are arranged, where p is the number of operation plan candidates. In the example in FIG. 7, p = 4. The individual variable included in the solution vector Y is a binary variable having a value of 0 or 1. The i-th variable in the solution vector Y indicates whether the i-th operation plan candidate is adopted. The value 0 represents that the corresponding operation plan candidate is not adopted, and the value 1 represents that the corresponding operation plan candidate is adopted.

Next, the information processing apparatus 100 generates matrices A, B, and Z and a vector Q. The matrix A is a matrix having a size of $n \times m$ indicating a relationship between loads and logistics plan candidates. In the matrix A, n is the number of loads. In the example in FIG. 7, n = 3. An element (i, j) in the matrix A is a flag indicating whether a logistics plan candidate j relates to a load i. The value 0 represents that the logistics plan candidate j does not relate to the load i, and the value 1 represents that the logistics plan candidate j relates to the load i.

The matrix B is a matrix having a size of $p \times m$ indicating a relationship between operation plan candidates and logistics plan candidates. An element (i, j) in the matrix B is a flag indicating whether the logistics plan candidate j uses an operation plan candidate i. The value 0 represents that the logistics plan candidate j does not use the operation plan candidate i, and the value 1 represents that the logistics plan candidate j uses the operation plan candidate i.

The matrix Z is a matrix having a size of $s \times m$ indicating a relationship between inter-base sections and logistics plan candidates, where s is the total number of sections. The total number of sections is calculated by counting the number of sections between adjacent bases in each operation plan candidate and summing up the number of sections of the plurality of operation plan candidates. In the example in FIG. 7, the number of sections in each of the operation plan candidates D1 to D4 is 3, and therefore, s = 12. If the logistics plan candidate j does not use the section i, the element (i, j) in the matrix Z represents 0. If the logistics plan candidate j uses the section i, the element (i, j) in the matrix Z represents the weight of a corresponding load to be transported. The vector Q is a column vector having the size s. The i-th element in the vector Q represents the loadable weight of a corresponding transporter in the section i.

A matrix 141 is the matrix A generated from the example in FIG. 7. A matrix 142 is the matrix B generated from the example in FIG. 7. A matrix 143 is the matrix Z generated from the example in FIG. 7. A vector 144 is the vector Q generated from the example in FIG. 7.

Next, the information processing apparatus 100 defines three constraint conditions expressed by mathematical expressions (1) to (3) by using the solution vectors X and Y, the matrices A, B, and Z, and the vector Q. A first constraint condition expressed by the mathematical expression (1) indicates that n loads are all transported by at least one logistics plan candidate selected. The right side of the mathematical expression (1) is a vector in which all elements are 1.

A second constraint condition expressed by the mathematical expression (2) indicates that all the operation plan candidates used in the at least one logistics plan candidate selected are selected. M in the right side of the mathematical expression (2) is a sufficiently large scalar constant. A third constraint condition expressed by the mathematical expression (3) indicates that the total weight of the loads is equal to or less than the loadable weight in each section.

$$AX = 1 \tag{1}$$

$$BX \leq M \times Y \tag{2}$$

$$ZX \leq Q \tag{3}$$

Next, the information processing apparatus 100 defines an objective function expressed by a mathematical expression (4). The objective function expressed by the mathematical expression (4) indicates the cost of a delivery plan. The cost of a delivery plan is the sum of the cost of the operation plan and the cost of the logistics plan. The object of the optimization is to minimize the value of this objective function.

$$\sum_{i=1}^{p} c_i y_i + \sum_{i=1}^{m} t_i x_i \tag{4}$$

In the mathematical expression 4, a vector c is a row vector of the size p. The i-th element in the vector c indicates the cost of an operation plan candidate i. A vector t is a row vector of the size m. The i-th element in the vector t indicates the cost of the logistics plan candidate i. The i-th variable in the solution vector Y is represented by $y_i$, and the i-th variable in the solution vector X is represented by $x_i$. Therefore, the first term represents the total cost of the at least one operation plan candidate selected, and the second term represents the total cost of the at least one logistics plan candidate selected. A vector 145 is the vector c generated from the example in FIG. 7. A vector 146 is the vector t generated from the example in FIG. 7.

The cost of the individual operation plan candidate is, for example, the sum of a fixed cost per transporter and a variable cost proportional to a corresponding running time. The running time is the total time needed between the corresponding bases. The fixed cost corresponds to the depreciation cost of the transporter, etc. The variable cost corresponds to the labor cost of the driver, the fuel cost, etc. The cost of the individual logistics plan candidate is, for example, a transshipment cost proportional to the number of transshipments and the weight of the load. The transshipment cost is, for example, the product of the number of transshipments, the weight of the load, and a constant.

Based on the objective function and the constraint conditions formulated as described above, the information processing apparatus 100 searches for the solution vectors X and Y that minimize the value of the objective function while satisfying the constraint conditions. In this way, at least one operation plan candidate and at least one logistics plan candidate are selected.

Next, the periodicity of a delivery plan will be described.

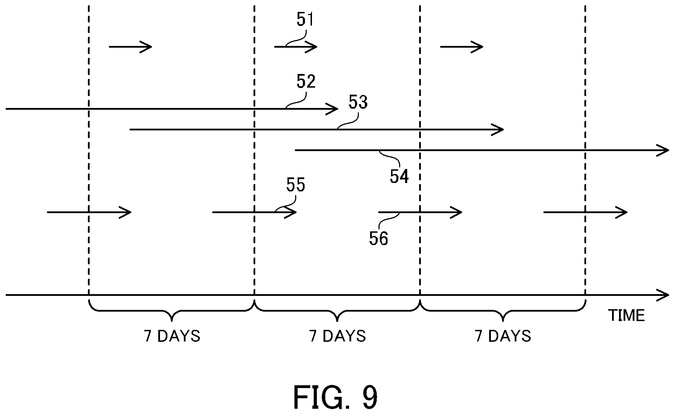

FIG. 9 illustrates examples of the operation plans that extend over the boundaries of a plan cycle.

Logistics operators create periodic delivery plans so as to secure drivers and base workers for executing the delivery plans and standardize business operations that reduce work errors. According to the second embodiment, a logistics operator creates a one-week delivery plan and executes this plan repeatedly. The period of one cycle is 7 × 24 hours from 0:00 on day 0 to 24:00 on day 6.

However, in the delivery plan, many transporters travel in parallel, and however the period of one cycle is defined, some transporters travel over the boundary times. In the example in FIG. 9, an operation plan candidate 51 has both the departure time and arrival time within the same week and does not extend over any boundary time.

In contrast, the transporters based on operation plan candidates 52, 53, and 54 continue to travel over two weeks. As for the operation plan candidate 52, while the arrival time at the end point is included in the week of interest, the departure time at the start point is in the week two weeks before the week of interest. That is, the operation plan candidate 52 extends over the start time of the week of interest. As for the operation plan candidate 53, the departure time at the start point is in the previous week of the week of interest, and the arrival time at the end point is in the next week of the week of interest. That is, the operation plan candidate 53 extends over the start time and the end time of the week of interest. As for the operation plan candidate 54, while the departure time at the start point is included in the week of interest, the arrival time at the end point is in the week two weeks after the week of interest. That is, the operation plan candidate 54 extends over the end time of the week of interest.

In addition, while the travel period of the operation plan candidate 55 is less than one week, the departure time at the start point is in the previous week of the week of interest. That is, the operation plan candidate 55 extends over the start time of the week of interest. While the travel period of the operation plan candidate 56 is less than one week, the arrival time at the end point is in the next week of the week of interest. That is, the operation plan candidate 56 extends over the end time of the week of interest.

As one method for handling these periodic operation plan candidates as an integer programming problem, the information processing apparatus 100 could generate operation plan candidates by using only the time in the period of one cycle. In this case, an operation plan candidate extending over a boundary time is divided into at least two operation plan candidates, each of which has the boundary time as an edge point.

However, when dividing an operation plan candidate, which is originally a single operation, the information processing apparatus 100 sets the location where the transporter and the load are present at a boundary time as a boundary condition so as to appropriately generate logistics plan candidates. In this case, because the boundary condition is not optimized by the integer programming solver, the information processing apparatus 100 may fail to reach an optimal solution that could be found if the boundary condition could be changed.

Thus, according to the second embodiment, the information processing apparatus 100 accepts an operation plan candidate including a time outside the period of one cycle and does not divide a single operation plan candidate. In this way, no boundary conditions are needed. In this case, it is difficult to determine whether transshipment of a load is possible between transporters that depart in different weeks only by simply comparing the times included in different operation plan candidates. Therefore, the information processing apparatus 100 compares the times in view of the periodicity.

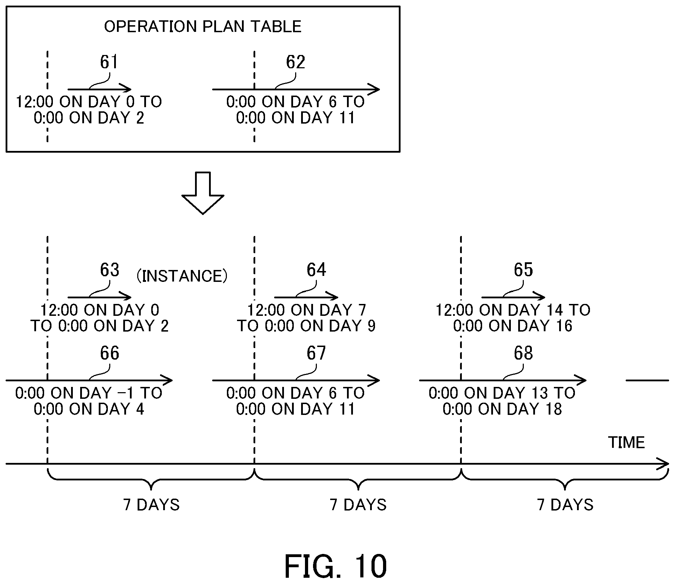

FIG. 10 illustrates examples of a relationship between models and instances of operation plan candidates.

The information processing apparatus 100 registers only the operation plan candidates that depart during a period from 0:00 on day 0 to 24:00 on day 6 in the operation plan table. While the transporters based on other operation plan candidates that depart in different weeks also travel during this period, these operation plan candidates are not registered in the operation plan table. Thus, the operation plan candidates registered in the operation plan table each correspond to a "model" representing one of the repeatedly executed operations of a transporter.

For example, operation plan candidates 61 and 62 are registered in the operation plan table. The operation plan candidate 61 has a travel period from 12:00 on day 0 to 0:00 on day 2. The operation plan candidate 62 has a travel period from 0:00 on day 6 to 0:00 on day 11. The operation plan candidate 62 is described using the time after the range from 0:00 on day 0 to 24:00 on day 6 as well.

In view of the periodicity, many operation plan candidates such as operation plan candidates 63 to 68 are derived from the operation plan candidates 61 and 62. The operation plan candidates 63 to 68 correspond to "instances" representing actual operations of transporters that depart in different weeks.

The operation plan candidates 63 to 65 are instances derived from the operation plan candidate 61. The operation plan candidate 63 has a travel period from 12:00 on day 0 to 0:00 on day 2. The operation plan candidate 64 has a travel period from 12:00 on day 7 to 0:00 on day 9. The operation plan candidate 65 has a travel period from 12:00 on day 14 to 0:00 on day 16. The time period of each of the operation plan candidates 63 to 65 is obtained by adding a time corresponding to an integer multiple of the cycle to the time period of the operation plan candidate 61.

The operation plan candidates 66 to 68 are instances derived from the operation plan candidate 62. The operation plan candidate 66 has a travel period from 0:00 on day -1 to 0:00 on day 4. The operation plan candidate 67 has a travel period from 0:00 on day 6 to 0:00 on day 11. The operation plan candidate 68 has a travel period from 0:00 on day 13 to 0:00 on day 18. The time period of each of the operation plan candidates 66 to 68 is obtained by adding a time corresponding to an integer multiple of the cycle to the time period of the operation plan candidate 62.

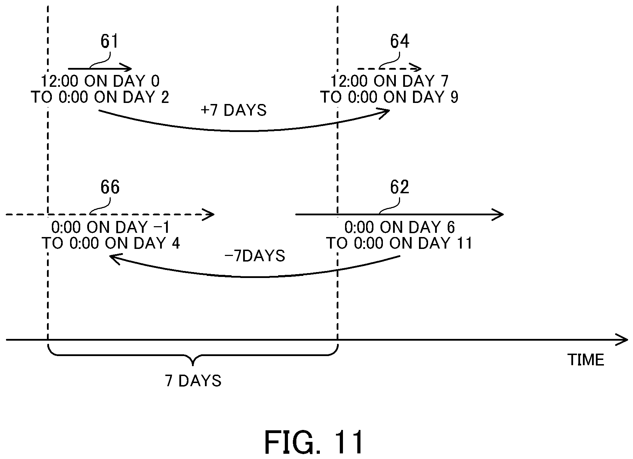

FIG. 11 illustrates examples, in each of which an actual time difference is calculated from the model of an operation plan candidate.

As described above, the information processing apparatus 100 determines whether transshipment of a load is possible by comparing an arrival time included in one operation plan candidate with a departure time included in another operation plan candidate at the same base. To determine whether the transshipment of the load is possible, the information processing apparatus 100 calculates the time period of an instance obtained by shifting the time period of a model by an integer multiple of the corresponding cycle. According to the second embodiment, the integer multiple of the cycle is $7 \times n$ days (n = ..., -2, -1, 0, +1, +2, ...).

For example, the information processing apparatus 100 adds - 7 days to the time period of the operation plan candidate 62, which is a model, to calculate the time period of the operation plan candidate 66, which is an instance. The information processing apparatus 100 calculates the time difference between the arrival time of the operation plan candidate 61 and the departure time of the operation plan candidate 66 as an actual time difference and determines whether transshipment of a load from the operation plan candidate 61 to the operation plan candidate 66 is possible based on the actual time difference. Alternatively, the information processing apparatus 100 calculates the time difference between the arrival time of the operation plan candidate 66 and the departure time of the operation plan candidate 61 as an actual time difference and determines whether transshipment of a load from the operation plan candidate 66 to the operation plan candidate 61 is possible based on the actual time difference.

In addition, for example, the information processing apparatus 100 adds +7 days to the time period of the operation plan candidate 61, which is a model, to calculate the time period of the operation plan candidate 64, which is an instance. The information processing apparatus 100 calculates the time difference between the arrival time of the operation plan candidate 64 and the departure time of the operation plan candidate 62 as an actual time difference and determines whether transshipment of a load from the operation plan candidate 64 to the operation plan candidate 62 is possible based on the actual time difference. Alternatively, the information processing apparatus 100 calculates the time difference between the arrival time of the operation plan candidate 62 and the departure time of the operation plan candidate 64 as an actual time difference and determines whether transshipment of the load from the operation plan candidate 62 to the operation plan candidate 64 is possible based on the actual time difference.

A time difference is a non-negative numerical value obtained by subtracting an arrival time from a departure time at the same base. An actual time difference is the shortest time difference obtained by adjusting the integer multiple of a corresponding cycle such that the time difference is minimized. The information processing apparatus 100 determines that transshipment of a load is possible when the actual time difference is between a lower limit value and an upper limit value. The lower limit value is a numerical value more than 0, and the upper limit value is a numerical value more than the lower limit value and less than half the cycle. The lower limit value and the upper limit value may be common to all the bases or may be different depending on the base. The lower limit value and the upper limit value may be specified by the user.

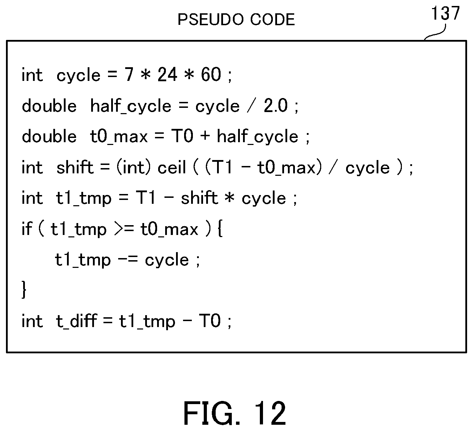

FIG. 12 illustrates an example of a pseudo code for calculating an actual time difference.

A pseudo code 137 indicates a method for calculating an actual time difference. In this example, an arrival time included in one operation plan candidate, which is a model, is represented by a time T0, and a departure time included in another operation plan candidate, which is a model, is represented by a time T1. The information processing apparatus 100 calculates a multiple by adding a half of the cycle to the time T0, subtracting the obtained sum from the time T1, dividing the obtained difference by the cycle, and applying a ceiling function to the obtained result. The information processing apparatus 100 calculates a shift amount by multiplying the cycle by the multiple and calculates a shifted time by subtracting the shift amount from the time T1. When the shifted time at this point is equal to or more than the sum of the time T0 and the half of the cycle, the information processing apparatus 100 further subtracts the time corresponding to one cycle from the shifted time. The information processing apparatus 100 calculates an actual time difference by subtracting the time T0 from the shifted time. In this way, the shortest time difference between the arrival time and the departure time is calculated in view of the periodicity.

Next, how presence or absence of boundary conditions makes operation plan candidates different will be described.

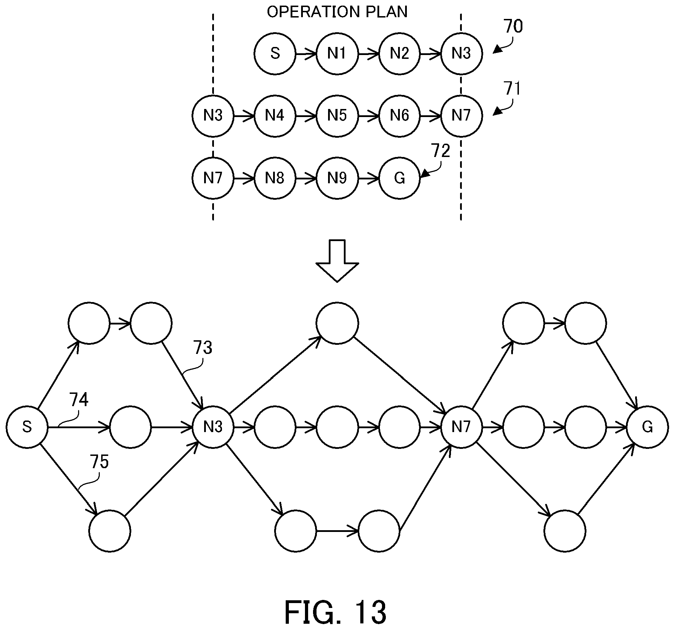

FIG. 13 illustrates examples of operation routes with boundary conditions.

The information processing apparatus 100 generates a plurality of operation plan candidates by changing the stopover bases between the start point and the end point of an old operation plan, without changing the start point and the end point. When there are boundary conditions, the information processing apparatus 100 could divide an old operation plan into operation plans 70, 71, and 72, for example.

The operation plan 70 indicates that a transporter travels from a base S, which is the start point, to a base N3 via bases N1 and N2. This transporter is present at the base N3 at a boundary time. The operation plan 71 indicates that a transporter travels from the base N3 to a base N7 via bases N4, N5, and N6. This transporter is present at the base N7 at the boundary time. The operation plan 72 indicates that a transporter travels from the base N7 to a base G, which is the end point, via bases N8 and N9.

The operation plan 70 defines that the start point is the base S and the end point is the base N3. The information processing apparatus 100 generates an operation plan candidate by changing the bases N1 and N2, without changing the bases S and N3. Thus, the fact that the transporter is present at the base N3 at the boundary time is fixed as a boundary condition. The operation plan 71 defines that the start point is the base N3 and the end point is the base N7. The information processing apparatus 100 generates an operation plan candidate by changing the bases N4, N5, and N6, without changing the bases N3 and N7. Thus, the fact that the transporter is present at the bases N3 and N7 at the corresponding boundary times is fixed as boundary conditions. The operation plan 72 defines that the start point is the base N7 and the end point is the base G. The information processing apparatus 100 generates an operation plan candidate by changing the bases N8 and N9, without changing the bases N7 and G. Thus, the fact that the transporter is present at the base N7 at a boundary time is fixed as a boundary condition.

According to an optimal solution search using the operation plan candidate described above, operation routes 73, 74, and 75 are obtained as the operation routes from the base S to the base G. However, since the boundary conditions are fixed, all the operation routes 73, 74, and 75 pass through the bases N3 and N7. Thus, operation routes that do not pass through the bases N3 and N7 are excluded from the examination target operation routes on which a transporter travels from the base S to the base G.

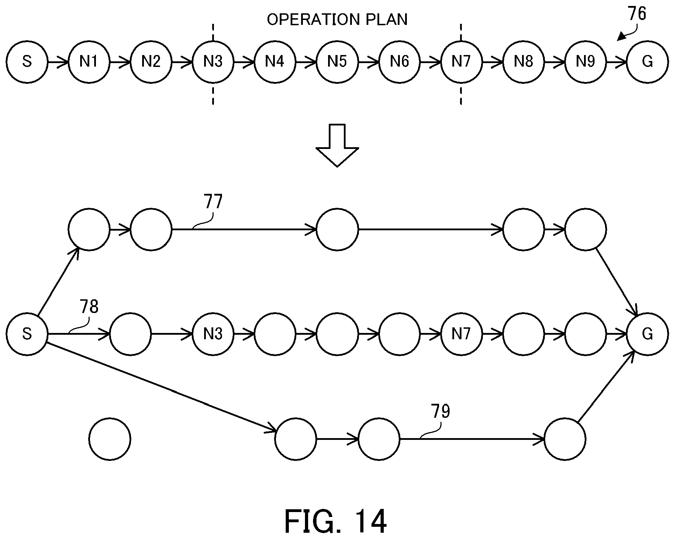

FIG. 14 illustrates examples of operation routes without boundary conditions.

An operation plan 76 is an old operation plan from a base S to a base G. The operation plan 76 indicates that a transporter travels from the base S, which is the start point, to the base G, which is the end point, via bases N1, N2, N3, N4, N5, N6, N7, N8, and N9. Although the operation plan 76 extends over two boundary times, the operation plan 76 will not be divided into three operation plans. That is, there are no boundary conditions. The information processing apparatus 100 generates operation plan candidates by changing the bases N1, N2, N3, N4, N5, N6, N7, N8, and N9, without changing the bases S and G. The information processing apparatus 100 is able to generate operation plan candidates in which a transporter is not present at the base N3 or N7 at the corresponding one of the boundary times.

According to an optimal solution search using the operation plan candidates described above, operation routes 77, 78, and 79 are obtained as the operation routes from the base S to the base G. The operation route 78 stops by the bases N3 and N7. However, the transporter does not need to be present at the bases N3 and N7 at the boundary times. The operation routes 77 and 79 pass through neither the base N3 nor N7. Thus, when there are no boundary conditions, the information processing apparatus 100 is able to obtain operation plan candidates that are greatly different from the old operation plans and find an optimal solution that is not found when there are boundary conditions.

Next, functions and a processing procedure of the information processing apparatus 100 will be described.

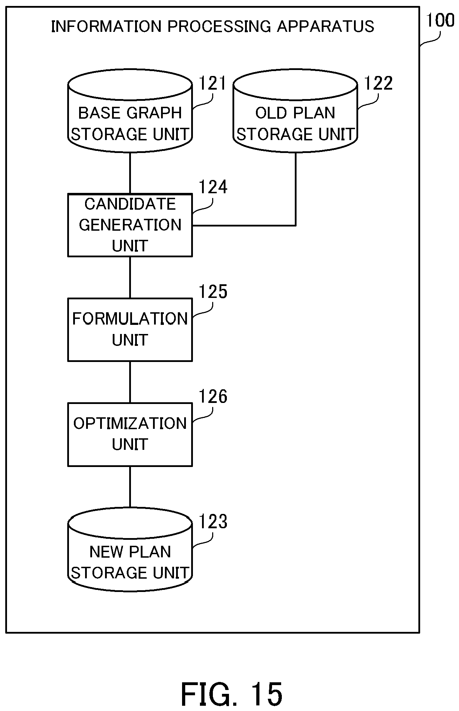

FIG. 15 is a block diagram illustrating a functional example of the information processing apparatus.

The information processing apparatus 100 includes a base graph storage unit 121, an old plan storage unit 122, a new plan storage unit 123, a candidate generation unit 124, a formulation unit 125, and an optimization unit 126. The base graph storage unit 121, the old plan storage unit 122, and the new plan storage unit 123 are implemented by using, for example, the RAM 102 or the HDD 103. The candidate generation unit 124, the formulation unit 125, and the optimization unit 126 are implemented by using, for example, the CPU 101 and a program.

The base graph storage unit 121 stores a base graph indicating a connection relationship among a plurality of bases. The base graph includes nodes representing the bases and edges representing roads among the bases. The old plan storage unit 122 stores a load table indicating load transportation demands, an operation plan table indicating old operation plans, and a logistics plan table indicating old logistics plans. The new plan storage unit 123 stores an operation plan table indicating new operation plans and a logistics plan table indicating new logistics plans.

The candidate generation unit 124 generates a plurality of operation plan candidates based on the base graph and the old operation plans. Examples of the generated operation plan candidates include an operation plan candidate obtained by changing the stopover bases, other than the start point and the end point, of an old operation plan. In addition, examples of the generated operation plan candidates include an operation plan candidate obtained by changing the departure time at the start point of an old operation plan. It is preferable that the candidate generation unit 124 generate various operation plan candidates, to find an optimum delivery plan.

In addition, the candidate generation unit 124 generates a plurality of logistics plan candidates based on the load data and the generated operation plan candidates. The candidate generation unit 124 searches for a combination of operation plan candidates for transporting a load from a designated departure base to a designated arrival base. When searching for the combination, the candidate generation unit 124 determines whether transshipment of the load is possible between different operation plan candidates. It is preferable that the candidate generation unit 124 generate various logistics plan candidates.

The formulation unit 125 generates a formulated integer programming problem based on the operation plan candidates and the logistics plan candidates generated by the candidate generation unit 124. The integer programming problem includes variables, each of which indicates whether to select an operation plan candidate, and variables, each of which indicates whether to select a logistics plan candidate. The integer programming problem also includes constraint conditions as expressed by the above mathematical expressions (1) to (3) and an objective function as expressed by the above mathematical expression (4).

The optimization unit 126 searches for an optimal solution that minimizes the value of the objective function by inputting the integer programming problem generated by the formulation unit 125 to an integer programming solver. The integer programming solver is software for solving the integer programming problem. The integer programming solver solves the integer programming problem by, for example, a branch-and-bound method. The branch and bound method includes a branching operation and a bounding operation. In the branching operation, a solution vector space is recursively divided into subspaces. In the bound operation, minimum value bounds of the objective variable in the subspaces are calculated, to exclude part of the subspaces from the search target.

The optimization unit 126 generates an operation plan table including the selected operation plan candidates and a logistics plan table including the selected logistics plan candidates. The optimization unit 126 stores delivery plan data including the generated operation plan table and logistics plan table in the new plan storage unit 123. The optimization unit 126 may display the optimized delivery plan data on the display device 111 or may transmit the optimized delivery plan data to another information processing apparatus.

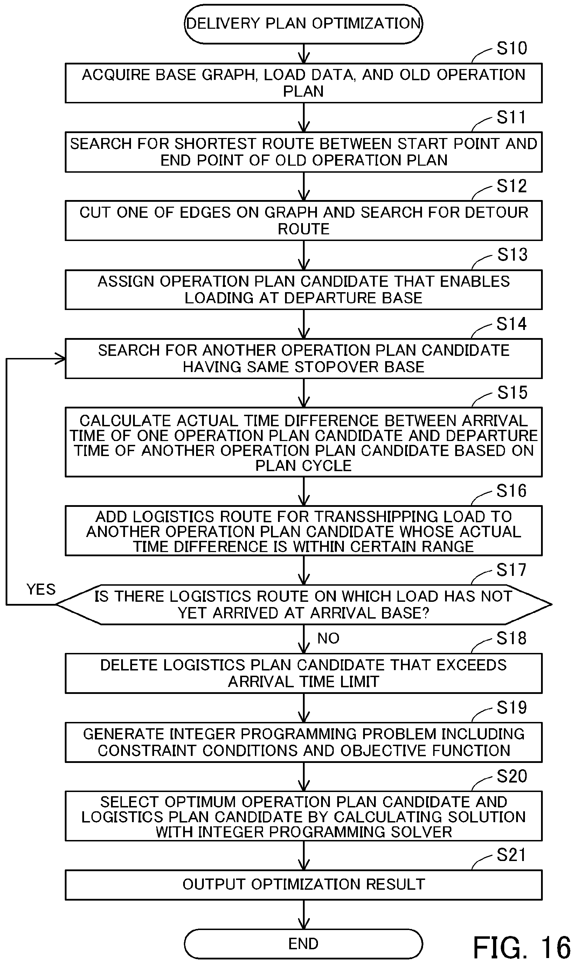

FIG. 16 is a flowchart illustrating an example of a procedure for optimizing a delivery plan.

(S10) The candidate generation unit 124 acquires a base graph, load data, and an old operation plan.

(S11) The candidate generation unit 124 searches the base graph for the shortest route between the start point and the end point of the old operation plan. For example, Dijkstra's algorithm is used to search for the shortest route. The candidate generation unit 124 generates an operation plan candidate indicating the shortest route found. When there are a plurality of old operation plans, the shortest route is searched for each old operation plan.

(S12) The candidate generation unit 124 randomly cuts, among the edges included in the base graph, at least one edge through which the old operation plan passes. The candidate generation unit 124 searches the base graph, in which the at least one edge has been cut, for the shortest route between the start point and the end point of the old operation plan as a detour route. The candidate generation unit 124 generates an operation plan candidate indicating the detour route found. When there are a plurality of old operation plans, the candidate generation unit 124 searches for a detour route per old operation plan.

(S13) The candidate generation unit 124 searches for at least one operation plan candidate that enables loading at a designated departure base per load and assigns the at least one operation plan candidate to its corresponding load. An operation plan candidate that enables loading is an operation plan candidate whose waiting time from its earliest possible loading time to the corresponding departure time is less than a threshold, among the operation plan candidates passing through the departure base. Having at least two operation plan candidates means generating at least two logistics plan candidates for the same load.

(S14) The candidate generation unit 124 searches for another operation plan candidate having the same stopover base as that of the operation plan candidate assigned to the load.

(S15) The candidate generation unit 124 calculates the actual time difference between the arrival time included in the assigned operation plan candidate and the departure time included in the another operation plan candidate at the same base based on the cycle of the delivery plan. The actual time difference is calculated by the calculation method described above.

(S16) If the actual time difference from the another operation plan candidate is within a certain range, the candidate generation unit 124 adds a logistics route for transshipping the load to the another operation plan candidate. Branching the logistics route means generating a different logistics plan candidate for the same load.

(S17) The candidate generation unit 124 determines whether there is a logistics route on which the load has not yet arrived at the designated arrival base. If there is a logistics route on which the load has not yet arrived at the designated arrival base, the processing returns to step S14, and the candidate generation unit 124 further searches for an operation plan candidate to which the load is transshipped. If there is no logistics route on which the load has not yet arrived at the designated arrival base, the candidate generation unit 124 generates a logistics plan candidate for each of the branched logistics routes, and the processing proceeds to step S18.

(S18) The candidate generation unit 124 deletes any logistics plan candidate that exceeds the designated arrival time limit among the logistics plan candidates generated in steps S14 to S17.

(S19) The formulation unit 125 generates a formulated integer programming problem including constraint conditions and an objective function from the plurality of generated operation plan candidates and the plurality of generated logistics plan candidates.

(S20) The optimization unit 126 solves the integer programming problem by using an integer programming solver so as to select an optimum combination of at least one operation plan candidate and at least one logistics plan candidate that minimizes the cost.

(S21) The optimization unit 126 outputs delivery plan data, which is the result of the optimization. The optimization unit 126 may store the delivery plan data in a nonvolatile storage, may display the delivery plan data on the display device 111, or may transmit the delivery plan data to another information processing apparatus.

As described above, the information processing apparatus 100 according to the second embodiment searches for a combination of at least one operation plan and at least one logistics plan, the combination minimizing the cost. In this way, compared with a case in which a delivery plan is manually created by trial and error, a delivery plan that achieves a lower cost is found. In addition, the information processing apparatus 100 reduces the burden on the logistics operators who creates delivery plans. Further, the information processing apparatus 100 generates periodic delivery plans. In this way, arrangements for the drivers and base workers are facilitated, work errors are reduced through the standardization of work contents, and the efficiency of the logistics operations is improved.

When optimizing a delivery plan, the information processing apparatus 100 generates operation plan candidates and logistics plan candidates that are not divided at any boundaries of a cycle. Consequently, no boundary conditions specifying the locations where the transporters and the loads are present at the boundary times are needed, and the information processing apparatus 100 is able to find an optimal solution that is difficult to find under the constraints of the boundary conditions. As a result, the accuracy in optimizing a delivery plan is improved. Further, upon generating a logistics plan candidate, the information processing apparatus 100 calculates the actual time difference between two operation plan candidates that pass through the same base in view of the periodicity of the operation plan candidates. In this way, even when the boundary conditions are eliminated, the information processing apparatus 100 is able to accurately determine whether transshipment of a load is possible.

According to one aspect, the accuracy in searching for periodic operation plans for transporters transporting loads is improved.

**Claims**

1. A computer program that causes a computer to execute a process comprising:

    acquiring candidate data (13) that includes a plurality of operation plan candidates (14a, 14b), each of which indicates a candidate of at least one location by which a transporter capable of transporting a load periodically stops and a candidate of a time at which the transporter stops by each of the at least one location, at least one of the plurality of operation plan candidates being defined by using a time included in a period of one cycle (15) and a time not included in the period of one cycle;
    determining, when a first operation plan candidate (14a) and a second operation plan candidate (14b) among the plurality of operation plan candidates include a common location (D) among the at least one location, whether transshipment of the load at the common location is possible by shifting a second time (16b) included in the second operation plan candidate by an integer multiple of the period of one cycle and comparing the shifted second time with a first time (16a) included in the first operation plan candidate; and
    searching the plurality of operation plan candidates for a combination of at least two operation plan candidates for transporting the load, based on a determination result of the transshipment.

2. The computer program according to claim 1, wherein

    one of the first time (T0) and the second time (T1) is an arrival time at which a transporter arrives at the common location and the other one of the first time and the second time is a departure time at which a transporter departs from the common location, and
    the determining includes determining that transshipment of the load is possible when a transshipment time based on a difference between the first time and the shifted second time (t1_tmp) is within a certain range.

3. The computer program according to claim 1, wherein the determining includes determining the integer multiple (shift) such that a transshipment time based on a difference between the first time (T0) and the shifted second time (t1_tmp) is minimized.

4. The computer program according to claim 1, wherein the searching includes searching combinations of operation plan candidates (136) enabling transporting the load from a designated departure location to a designated arrival location while transshipping the load for a combination of operation plan candidates such that a cost calculated by a cost function is minimized.

5. A search method executed by a computer, the search method comprising:

    acquiring candidate data (13) that includes a plurality of operation plan candidates (14a, 14b), each of which indicates a candidate of at least one location by which a transporter capable of transporting a load periodically stops and a candidate of a time at which the transporter stops by each of the at least one location, at least one of the plurality of operation plan candidates being defined by using a time included in a period of one cycle (15) and a time not included in the period of one cycle;
determining, when a first operation plan candidate (14a) and a second operation plan candidate (14b) among the plurality of operation plan candidates include a common location (D) among the at least one location, whether transshipment of the load at the common location is possible by shifting a second time (16b) included in the second operation plan candidate by an integer multiple of the period of one cycle and comparing the shifted second time with a first time (16a) included in the first operation plan candidate; and
searching the plurality of operation plan candidates for a combination of at least two operation plan candidates for transporting the load, based on a determination result of the transshipment.

6. An information processing apparatus comprising:

storage means (11) for storing candidate data (13) that includes a plurality of operation plan candidates (14a, 14b), each of which indicates a candidate of at least one location by which a transporter capable of transporting a load periodically stops and a candidate of a time at which the transporter stops by each of the at least one location, at least one of the plurality of operation plan candidates being defined by using a time included in a period of one cycle (15) and a time not included in the period of one cycle; and
processing means (12) for
determining, when a first operation plan candidate (14a) and a second operation plan candidate (14b) among the plurality of operation plan candidates include a common location (D) among the at least one location, whether transshipment of the load at the common location is possible by shifting a second time (16b) included in the second operation plan candidate by an integer multiple of the period of one cycle and comparing the shifted second time with a first time (16a) included in the first operation plan candidate, and
searching the plurality of operation plan candidates for a combination of at least two operation plan candidates for transporting the load, based on a determination result of the transshipment.

FIG. 1

INFORMATION PROCESSING APPARATUS 100

CPU 101

GPU 104

DISPLAY DEVICE 111

RAM 102

INPUT INTERFACE 105

INPUT DEVICE 112

HDD 103

MEDIA READER 106

RECORDING MEDIUM 113

COMMUNI-CATION INTERFACE 107

NETWORK 114

BUS

# FIG. 2

FIG. 3

LOAD TABLE                                        131

| LOAD ID | C0001 |
|---|---|
| WEIGHT | 915 kg |
| EARLIEST POSSIBLE LOADING TIME | 19:00 ON DAY 1 |
| ARRIVAL TIME LIMIT | 08:00 ON DAY 2 |
| DEPARTURE BASE | N001 |
| ARRIVAL BASE | N010 |

# FIG. 4

OPERATION PLAN TABLE 132

| OPERATION ID | D0001 |
|---|---|
| OPERATION MODE | ONE WAY |
| MAXIMUM LOAD CAPACITY | 15 t |
| CATEGORY | TRUCK |
| NUMBER OF STOPOVER BASES | 3 |
| FIRST BASE ID | N001 |
| FIRST DEPARTURE TIME | 0:00 ON DAY 6 |
| SECOND BASE ID | N002 |
| SECOND ARRIVAL TIME | 12:00 ON DAY 8 |
| SECOND DEPARTURE TIME | 14:00 ON DAY 8 |
| THIRD BASE ID | N003 |
| THIRD ARRIVAL TIME | 0:00 ON DAY 11 |
| THIRD DEPARTURE TIME | – |
| ⋮ | ⋮ |

FIG. 5

LOGISTICS PLAN TABLE    133

| | |
|---|---|
| LOAD ID | C0001 |
| NUMBER OF OPERATIONS USED | 2 |
| FIRST OPERATION ID | D0002 |
| FIRST INSTANCE NUMBER | 0 |
| FIRST START-POINT ID | N001 |
| FIRST START-POINT ORDINAL NUMBER | 1 |
| FIRST END-POINT ID | N002 |
| FIRST END-POINT ORDINAL NUMBER | 2 |
| SECOND OPERATION ID | D0003 |
| SECOND INSTANCE NUMBER | 0 |
| SECOND START-POINT ID | N002 |
| SECOND START-POINT ORDINAL NUMBER | 2 |
| SECOND END-POINT ID | N010 |
| SECOND END-POINT ORDINAL NUMBER | 3 |
| ⋮ | ⋮ |

FIG. 6

BASE GRAPH                                    134

OPERATION PLAN TABLE          135

| D1 | 10 t | A, E, F, B |
|----|------|-----------|
| D2 | 9 t  | A, G, H, B |
| D3 | 7 t  | C, E, H, D |
| D4 | 8 t  | C, G, F, D |

LOGISTICS PLAN TABLE          136

| C1 | 4 t | A, (D1), E, (D3), H |
|----|-----|---------------------|
| C1 | 4 t | A, (D2), H |
| C2 | 2 t | C, (D3), H, (D2), B |
| C2 | 2 t | C, (D4), G, (D2), B |
| C2 | 2 t | C, (D4), F, (D1), B |
| C3 | 3 t | G, (D2), H, (D3), D |
| C3 | 3 t | G, (D4), D |

FIG. 7

$$A = \begin{pmatrix} 1 & 1 & 0 & 0 & 0 & 0 & 0 \\ 0 & 0 & 1 & 1 & 1 & 0 & 0 \\ 0 & 0 & 0 & 0 & 0 & 1 & 1 \end{pmatrix} \underset{\curvearrowright}{141}$$

FIG. 8

$$B = \begin{pmatrix} 1 & 0 & 0 & 0 & 1 & 1 & 0 \\ 0 & 1 & 1 & 1 & 0 & 0 & 0 \\ 1 & 0 & 1 & 0 & 0 & 1 & 0 \\ 0 & 0 & 0 & 1 & 1 & 0 & 1 \end{pmatrix} \underset{\curvearrowright}{142}$$

$$Z = \begin{pmatrix} 4 & 0 & 0 & 0 & 0 & 0 & 0 \\ 0 & 0 & 0 & 0 & 0 & 0 & 0 \\ 0 & 0 & 0 & 0 & 2 & 0 & 0 \\ 0 & 4 & 0 & 0 & 0 & 0 & 0 \\ 0 & 4 & 0 & 2 & 0 & 3 & 0 \\ 0 & 0 & 2 & 2 & 0 & 0 & 0 \\ 0 & 0 & 2 & 0 & 0 & 0 & 0 \\ 4 & 0 & 2 & 0 & 0 & 0 & 0 \\ 0 & 0 & 0 & 0 & 0 & 3 & 0 \\ 0 & 0 & 0 & 2 & 2 & 0 & 0 \\ 0 & 0 & 0 & 0 & 2 & 0 & 3 \\ 0 & 0 & 0 & 0 & 0 & 0 & 3 \end{pmatrix} \underset{\curvearrowright}{143} \qquad Q = \begin{pmatrix} 10 \\ 10 \\ 10 \\ 9 \\ 9 \\ 9 \\ 7 \\ 7 \\ 7 \\ 8 \\ 8 \\ 8 \end{pmatrix} \underset{\curvearrowright}{144}$$

$$c = \begin{pmatrix} 10000 & 12000 & 9000 & 8000 \end{pmatrix} \underset{\curvearrowright}{145}$$

$$t = \begin{pmatrix} 1000 & 0 & 0 & 500 & 500 & 750 & 0 \end{pmatrix} \underset{\curvearrowright}{146}$$

FIG. 9

OPERATION PLAN TABLE

61
→
12:00 ON DAY 0 TO
0:00 ON DAY 2

62
→
0:00 ON DAY 6 TO
0:00 ON DAY 11

⇩

63 (INSTANCE)
→
12:00 ON DAY 0
TO 0:00 ON DAY 2

64
→
12:00 ON DAY 7
TO 0:00 ON DAY 9

65
→
12:00 ON DAY 14 TO
0:00 ON DAY 16

66
→
0:00 ON DAY −1 TO
0:00 ON DAY 4

67
→
0:00 ON DAY 6 TO
0:00 ON DAY 11

68
→
0:00 ON DAY 13 TO
0:00 ON DAY 18

TIME

7 DAYS          7 DAYS          7 DAYS

FIG. 10

61

12:00 ON DAY 0
TO 0:00 ON DAY 2

+7 DAYS

64

12:00 ON DAY 7
TO 0:00 ON DAY 9

66

0:00 ON DAY −1
TO 0:00 ON DAY 4

−7DAYS

62

0:00 ON DAY 6
TO 0:00 ON DAY 11

TIME

7 DAYS

FIG. 11

26

PSEUDO CODE 137

```
int  cycle = 7 * 24 * 60 ;
double  half_cycle = cycle / 2.0 ;
double  t0_max = T0 + half_cycle ;
int  shift = (int) ceil ( (T1 − t0_max) / cycle ) ;
int  t1_tmp = T1 − shift * cycle ;
if ( t1_tmp >= t0_max ) {
    t1_tmp −= cycle ;
}
int  t_diff = t1_tmp − T0 ;
```

# FIG. 12

FIG. 13

OPERATION PLAN

76

S → N1 → N2 → N3 → N4 → N5 → N6 → N7 → N8 → N9 → G

⇩

77

78

79

S

N3

N7

G

FIG. 14

INFORMATION PROCESSING APPARATUS | 100

BASE GRAPH STORAGE UNIT | 121

OLD PLAN STORAGE UNIT | 122

CANDIDATE GENERATION UNIT | 124

FORMULATION UNIT | 125

OPTIMIZATION UNIT | 126

NEW PLAN STORAGE UNIT | 123

FIG. 15

```
          ┌──────────────────────────────┐
          │   DELIVERY PLAN OPTIMIZATION  │
          └──────────────────────────────┘
                         │
                         ▼                        S10
   ┌──────────────────────────────────────────────┐
   │  ACQUIRE BASE GRAPH, LOAD DATA, AND OLD        │
   │  OPERATION PLAN                                │
   └──────────────────────────────────────────────┘
                         │
                         ▼                        S11
   ┌──────────────────────────────────────────────┐
   │  SEARCH FOR SHORTEST ROUTE BETWEEN START POINT │
   │  AND END POINT OF OLD OPERATION PLAN           │
   └──────────────────────────────────────────────┘
                         │
                         ▼                        S12
   ┌──────────────────────────────────────────────┐
   │  CUT ONE OF EDGES ON GRAPH AND SEARCH FOR      │
   │  DETOUR ROUTE                                  │
   └──────────────────────────────────────────────┘
                         │
                         ▼                        S13
   ┌──────────────────────────────────────────────┐
   │  ASSIGN OPERATION PLAN CANDIDATE THAT ENABLES  │
   │  LOADING AT DEPARTURE BASE                     │
   └──────────────────────────────────────────────┘
                         │
                         ▼                        S14
   ┌──────────────────────────────────────────────┐
   │  SEARCH FOR ANOTHER OPERATION PLAN CANDIDATE   │
   │  HAVING SAME STOPOVER BASE                     │
   └──────────────────────────────────────────────┘
                         │
                         ▼                        S15
   ┌──────────────────────────────────────────────┐
   │  CALCULATE ACTUAL TIME DIFFERENCE BETWEEN      │
   │  ARRIVAL TIME OF ONE OPERATION PLAN CANDIDATE  │
   │  AND DEPARTURE TIME OF ANOTHER OPERATION PLAN  │
   │  CANDIDATE BASED ON PLAN CYCLE                 │
   └──────────────────────────────────────────────┘
                         │
                         ▼                        S16
   ┌──────────────────────────────────────────────┐
   │  ADD LOGISTICS ROUTE FOR TRANSSHIPPING LOAD TO │
   │  ANOTHER OPERATION PLAN CANDIDATE WHOSE ACTUAL │
   │  TIME DIFFERENCE IS WITHIN CERTAIN RANGE       │
   └──────────────────────────────────────────────┘
                         │
                         ▼                        S17
   YES      ◇ IS THERE LOGISTICS ROUTE ON WHICH LOAD HAS NOT ◇
   ◄─────────   YET ARRIVED AT ARRIVAL BASE?
                         │ NO
                         ▼                        S18
   ┌──────────────────────────────────────────────┐
   │  DELETE LOGISTICS PLAN CANDIDATE THAT EXCEEDS  │
   │  ARRIVAL TIME LIMIT                            │
   └──────────────────────────────────────────────┘
                         │
                         ▼                        S19
   ┌──────────────────────────────────────────────┐
   │  GENERATE INTEGER PROGRAMMING PROBLEM INCLUDING│
   │  CONSTRAINT CONDITIONS AND OBJECTIVE FUNCTION  │
   └──────────────────────────────────────────────┘
                         │
                         ▼                        S20
   ┌──────────────────────────────────────────────┐
   │  SELECT OPTIMUM OPERATION PLAN CANDIDATE AND   │
   │  LOGISTICS PLAN CANDIDATE BY CALCULATING       │
   │  SOLUTION WITH INTEGER PROGRAMMING SOLVER      │
   └──────────────────────────────────────────────┘
                         │
                         ▼                        S21
   ┌──────────────────────────────────────────────┐
   │            OUTPUT OPTIMIZATION RESULT          │
   └──────────────────────────────────────────────┘
                         │
                         ▼
          ┌──────────────────────────────┐
          │             END              │
          └──────────────────────────────┘
```

FIG. 16

Europäisches
Patentamt

European
Patent Office

Office européen
des brevets

# EUROPEAN SEARCH REPORT

Application Number

**EP 23 17 8912**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 811 797 B2 (ZAHN MARCUS [DE]; HUENE HOLGER [DE]; GOTTLIEB JENS [DE]; SAP SE [DE]) 7 November 2017 (2017-11-07) <br> * figures 3-6 * <br> * column 5, lines 29-42 * <br> * column 6, lines 19-27 * <br> * column 9, lines 27-53 * <br> * column 10, lines 10-20 * <br> * column 12, lines 1-13 * <br> ----- | 1-6 | INV. <br> G06Q10/047 <br> G06Q10/083 <br> G06Q10/0831 <br> G06Q10/0832 <br> G06Q10/0835 <br> G06Q10/08 |

TECHNICAL FIELDS
SEARCHED      (IPC)

G06Q

The present search report has been drawn up for all claims

| Place of search | Date of completion of the search | Examiner |
|---|---|---|
| Munich | 8 January 2024 | Gabriel, Christiaan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 17 8912

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2024

| Patent document cited in search report | | Publication date | Patent family member(s) | Publication date |
|---|---|---|---|---|
| US 9811797 | B2 | 07-11-2017 | NONE | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6263220 A
- JP 2002304501 A
- US 20080294484
- US 20180089608